# EUROPEAN PATENT SPECIFICATION

(11) **EP 2 940 537 B1**
(45) Date of publication and mention of the grant of the patent: **20.03.2019**
(21) Application number: 14173922.7
(22) Date of filing: 25.06.2014
(51) Int. Cl.: G05B 19/042

(54) **METHOD AND SYSTEM FOR MULTI-CYCLE REPLICATION**
VERFAHREN UND VORRICHTUNG ZUR MULTI-ZYKLUS-REPLIKATION
PROCEDES ET APPAREIL POUR LE REPLICATION MULTICYCLES

(30) Priority: 30.04.2014 EP 14001518
(43) Date of publication of application: 04.11.2015
(73) Proprietor: ABB Schweiz AG, 5400 Baden (CH)
(72) Inventor: Gamer, Thomas, Dr., 68782 Brühl (DE); Sehestedt, Stephan, 68165 Mannheim (DE); Stattelmann, Stefan, 68789 Sankt Leon-Rot (DE)
(74) Representative: Marks, Frank

(56) References cited:
- WO-A1-99/32947
- US-A1- 2002 095 403

## Description

The present invention generally relates to electronic data processing, and more particularly, relates to methods, computer program products and systems for multi-cycle replication for control entities.

State replication is used with redundancy patterns that have a primary entity executing a control application and one or more secondary entities in order to achieve high availability of the control system. Typically, the primary entity replicates its relevant state to the secondary entities. In case the primary entity experiences a failure (unplanned) or has to be removed from the system (planned, e.g., maintenance), a switchover to a particular secondary entity is performed. Ideally, this particular secondary entity received the latest state of the primary entity before the failure/removal of the primary entity and can take over and continue the control application execution from the last known checkpoint. As used hereinafter, a checkpoint includes the entire application state of a control application at the control cycle when the replications starts. A checkpoint may be transmitted in its entirety (full checkpoint) or differentially (partial or differential checkpoint).

The Document WO 99/32947 A1 discloses a system and method for maintaining data coherency between a primary process controller and a backup process controller operable to replace the primary process controller upon failure, wherein the primary process controller cyclically executes the process control tasks wherein the system comprises a tracking circuit operable to detect changed data in a main memory in the primary process controller, a data buffer for temporarily storing the changed data; and data transfer circuitry for transferring the changed data to a backup memory in the backup process controller at least once during each base control cycle of the primary process controller.

US 2002/095403 A1 discloses techniques for managing caches in a system with multiple caches that may contain different copies of the same data item. For coordinating the write-to-disk operations performed on such data items it is made sure that older versions of a data item are not written over by a laterversion.

Most of the prior art state replication methods focus on replicating the state within a single cycle in order to always have a valid checkpoint. This requires however that the executing entity provides enough computational power to state change management/monitoring and perform checkpoint creation and sending without affecting application execution and cycle times. In addition, enough transmission bandwidth must be available to send the checkpoint to the secondary entity once per cycle. Finally, the secondary entity must provide the computational power to read, process, and set the received checkpoint once per cycle.

With an ever increasing need for shorter cycle times, these typically used single cycle state replication methods might not be applicable anymore because there may be a lack of processing power for performing checkpointing and application execution with very short cycle times. Further, there are application domains that do not require a full checkpoint to be available every cycle for switchover. Instead, in these domains it may be desirable to reserve as much processing power and communication bandwidth as possible for application execution and limit replication overhead to what is absolutely necessary. In both situations, multi-cycle state replication is beneficial. After successful transmission of a full or differential checkpoint a valid copy of the application state is replicated at the secondary entity. The time it takes to transmit the checkpoint is referred to as replication period. The replication period can span multiple control cycles. During the transmission of partial checkpoints typically there is no valid checkpoint available at the secondary entity as not all parts of the checkpoint have been transmitted yet.

Some multi-cycle state replication methods are known in the art, such as for example, managing dirty bits for the entire state and continuously replicating a limited amount of state data. Thus, multiple cycles may be required for transmitting the entire checkpoint. Additional state changes might occur during such multi-cycle replication. Ensuring a consistent checkpoint may involve sending certain state variables multiple times. With the known multi-cycle state replication methods it is not possible to guarantee a time period required for state replication of a single checkpoint. Nor is it possible to guarantee whether it is actually possible to receive a full and consistent checkpoint at the secondary entity. This depends on application characteristics, such as frequency of state changes, distribution of changes of state variables, etc.

Therefore, there is a need to improve multi-cycle state replication in order to increase the likelihood for achieving a valid checkpoint and to decrease the average replication time period. This technical problem is solved by a computer implemented method, a corresponding computer program and a system which executes the computer implemented method as disclosed in the independent claims.

The computer implemented method is an adaptive multi-cycle replication method which performs the following steps with each with each control cycle of a control application/ control program executed by a primary control entity.

An application state of the control application is read from a plurality of memory cells (memory blocks) of the primary control entity. Memory block as used hereinafter describes a certain portion of addressable memory storage which can include 1 to k memory cells. For example, memory cells may be grouped into a memory block and the memory block can be treated like a single memory cell to save memory. For example, when computing dirty bits less bits are required as only one bit per block is computed rather than for each cell. In the following description the terms memory cell and memory block can therefore be seen as synonyms. Each memory cell corresponds to a state variable of the application state. Such a state variable can be any input, output or internal parameter of the control system which is appropriate to describe the state of the control application. For example, if the control application is an application to monitor the pressure (e.g., gas pressure) in a pipe system and to adjust a valve if the pressure deviates from a target pressure value, then the pressure value measured by a sensor as input parameter to the control application may be stored in a memory cell as a state variable. Also the current state of the valve (e.g., open, closed, etc.) may be stored as a state variable in a corresponding memory cell. In addition, the difference between set point and measured value may be stored as an internal state variable. A control cycle, as used hereinafter, describes the time needed for one complete execution of the control program. In the above example, a control cycle of the pressure monitoring program/application may start with reading the latest pressure measurement values and may end with writing actuator output values for the adjustment of the valve if needed or with the finding that no adjustment is needed. The next control cycle starts with repeating the measurement of the pressure values. That is, at the end of the control cycle a state variable may have changed vs. the preceding control cycle or may remain unchanged.

Then replication priority metrics is applied to each state variable to compute a replication priority per state variable based on the change behavior of the state variable. The term replication priority metrics as used hereinafter refers to one or more calculation rules which are applied to a particular state variable to compute a result value wherein the result value reflects a replication priority for the particular state variable in relation to other state variables. Typically, the calculation rule computes a result value based on the change behavior of the particular state variable. The result value reflecting the replication priority may also be based on other parameters, such as for example, a memory map or the memory cell size. In the above example, the change behavior of the valve state may relate to changes of the valve from open to closed or vice versa (assuming that no intermediate states can be reached). Assuming that a further state variable relates to the monitoring of a temperature of the gas and the operating of a cooling device in response to the gas temperature rising above a certain threshold. Only if the gas pressure rises too much because of rising temperature, the cooling device may be activated. The state variable for the cooling device may change with a lower frequency than the state variable for the valve state if the pressure can normally be kept within a tolerance range by operating the valve. The replication priority metrics may compute a higher replication priority for the cooling device state variable than for the valve state. variable.

At one point in time the entire application state, which corresponds to a vector including all relevant control variables of the control application, needs to be replicated to a secondary control entity to provide redundancy in case the primary control entity cannot maintain its control function. The replication of the application state to the secondary control entity allows switching control from the primary entity to the secondary entity. Such an application state to be replicated is also referred to as checkpoint. The primary control entity may now start to send partial checkpoints (i.e., portions of the checkpoint) to the secondary control entity spread over multiple control cycles. The control cycle when a first portion of the checkpoint is received by the secondary control entity defines the start of the replication period and the control cycle when a last portion of the checkpoint is received defines the end of the replication period. Note that it is not required that during the replication period the entire application state (i.e., all portions of the application state) is replicated. Only a part of the application state may be replicated dependent on system constraints like bandwidth or control cycle length.

That is, if the current control cycle belongs to a replication period a sub-set of the plurality of memory cells is determined based on the replication priority of the respective state variables. This sub-set corresponds to a portion of the application state which includes state variables having a higher replication priority than other state variables of other sub-sets with lower priority. The determined sub-set is then replicated to at least a secondary control entity for at least partial state replication of the application state of the primary control entity. The size of the determined sub-set may depend on physical constraints or limiting factors of the control entities and/or the connection between them. For example, the bandwidth which is available between the primary and secondary control entities can be a limiting factor for the number of state variables which can be replicated within one control cycle. Other limiting factors can be the computing power of the primary control entity which is available for the execution of the priority replication metrics or a substantially limited storage capacity of the control entities (e.g., in embedded devices). It is to be noted that a memory cell which did not change since an earlier partial checkpoint replication is not considered for future partial replication until a further change of the respective memory cell occurs - even though the computed metrics value may indicate a high replication priority for this cell.

The disclosed method can increase the likelihood that important state variables are replicated with high priority and thus, are available in the secondary control entity for a switchover even if no full valid checkpoint exists. Increasing the likelihood of successful multi-cycle state replication with the claimed method allows applying multi-cycle state replication in situations with very fast cycle times and further system constraints allowing multi-cycle replication.

In one embodiment, the replication priority per state variable is computed by taking into account the change behavior of the state variable in at least one previous control cycle of the application.

The replication priority metrics may be implemented in various ways. A person skilled in the art may use, for example, monitoring of state changes during learning phases (in a sliding window or permanently), prediction techniques (e.g., learning a pattern, prediction based on input variables, or similar to access prediction in modern CPUs as known by a person skilled in the art), or correlation, (e.g., between input variables and internal state). Two alternative embodiments are disclosed in more detail.

In one embodiment, the replication priority metrics may be implemented by a change counter vector having counters per state variable which are incremented when a respective state variable has changed versus the preceding control cycle. That is, each counter includes the number of accumulated changes regarding the respective memory cell. The accumulated counter value is a measure for the frequency of changes for the respective state variable (memory cell). The sub-set of memory cells to be replicated may then be determined by sorting the memory cells according to the associated accumulated counter values. For example, memory cells with a higher accumulated counter value than other cells may have a higher replication priority than other cells (or vice versa, depending on the application scenario). The primary control entity may only be able to replicate a certain number of memory cells in one control cycle according to the physical constraints/limitations of the system. The sorting of the memory cells according to the associated accumulated counter values ensures that always such cells having the highest replication priorities in relation to the other cells are replicated in the current control cycle. That is, the sorting of the memory cells creates a replication priority ranking for all memory cells for the current control cycle and the determination of the sub-set includes the selection of n highest ranking cells wherein n corresponds to the number of cells which can be replicated in view of the physical system constraints/limitations.

In one embodiment, the replication priority metrics may be implemented by a history table and a prediction table. The history table uses n bits per state variable to buffer changes of the respective memory cell over the previous n-1 cycles and the current cycle. The prediction table stores 2n saturating counters with m bits per state variable. A particular saturating counter which is associated with a particular memory cell is incremented if the respective entry in the history table indicates a change of the particular memory cell vs. the preceding control cycle and the particular saturating counter value is below its maximum value 2m - 1. Further, the particular saturating counter is decremented if the respective entry in the history table indicates no change of the particular memory cell and the saturating counter value is above 0. The sub-set of memory cells to be replicated may then be determined by sorting the memory cells according to the associated saturating counter values and selecting memory cells for replication where a predefined priority threshold criterion is met.

The disclosed adaptive multi-cycle replication method can improve the reliability of controllers in high-end and low-end control applications. For high-end applications with very short cycle time, the available communication bandwidth on the communication link between primary and secondary control entity may be insufficient to replicate all state updates within one cycle, even if the communication link is only used for state replication. Moreover, there may be limitations in processor capacity due to the short cycle times. By spreading replication over multiple control cycles, redundancy can be added to these demanding applications while still guaranteeing a smooth takeover of the secondary control entity in case the primary control entity fails.

For low-end applications, there may not be a dedicated communication link to transmit information related to state replication. If the bandwidth has to be shared with other activities of the controller, this may also impair the capability of the controller to send all state updates in one control cycle. Consequently, the invention enables the addition of redundancy features to industrial controllers where this has not been possible before for cost reasons. Moreover, low-end applications may have less strict failover requirements and thus, prefer application execution over replication when assigning resources. Typically, low-end controllers have limited communication bandwidth. For example, there may be no dedicated channel for replication but rather the same channel as used for the communication of the application may be used for replication, too. Thus, normal application execution gets priority over the replication algorithm when assigning resources (communication bandwidth, processor time). Consequently, embodiments of the invention can provide higher capacity for application execution while still providing redundancy according to the given requirements.

In further embodiments, a computer program product when loaded into a memory of the computer system and executed by at least one processor of the computer system causes a computer system to execute the steps of the respective computer implemented method as disclosed.

Further aspects of the invention will be realized and attained by means of the elements and combinations particularly depicted in the appended claims. It is to be understood that both, the foregoing general description and the following detailed description are exemplary and explanatory only and are not restrictive of the invention as described.
FIG. 1 is a simplified flow chart of a computer implemented adaptive multi-cycle replication method according to an embodiment of the invention;
FIG. 2 illustrates a prior art approach for multi-cycle replication;
FIGs 3A, 3B illustrate a computer system with two control entities for adaptive multi-cycle replication;
FIG. 4 illustrates a counter based embodiment for computing a replication priority per state variable;
FIG. 5 is a pseudo code example for checkpoint creation according to an embodiment of the invention; and
FIG. 6 illustrates an embodiment for computing replication priorities based on a history table and a prediction table.

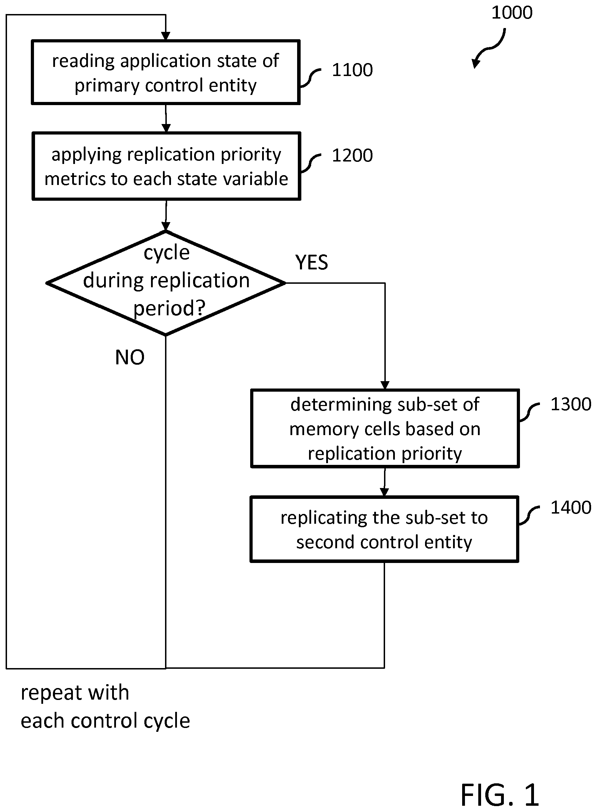

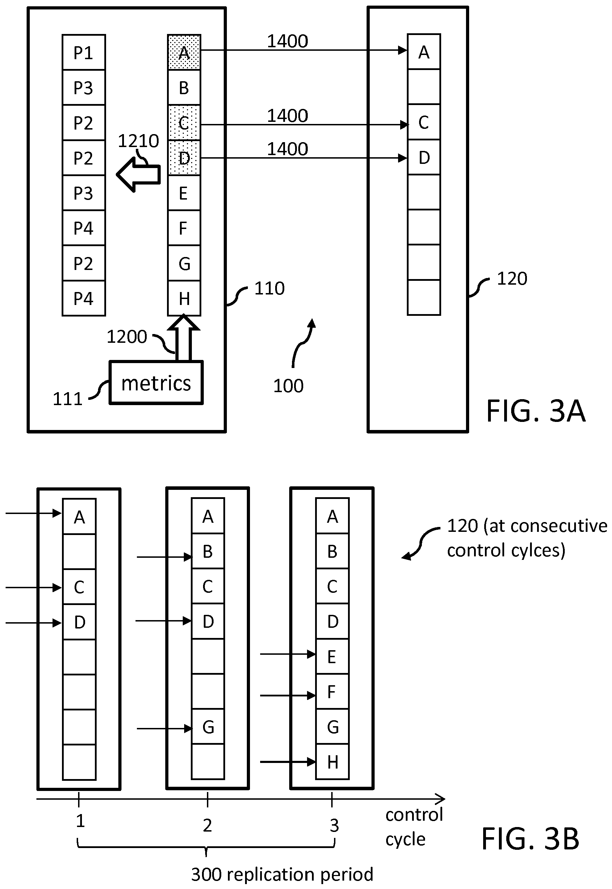

FIG. 1 is a simplified flow chart of a computer implemented adaptive multi-cycle replication method 1000 according to an embodiment of the invention. The method 1000 will be further explained in the context of FIGs. 3A and 3B.

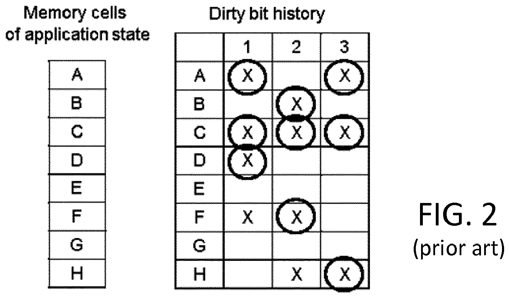

To clearly distinguish the adaptive multi-cycle replication method 1000 from prior art multi-cycle replication a short discussion of FIG. 2 (prior art approach) is given. The memory cells A to H include state variables which reflect the application state of a first control entity. The application state includes such information which is sufficient for a second control entity to continue with the control application in case the first entity stops execution of the control application for some reason. A switch can then be performed to the second control entity if the respective checkpoint was replicated from the first control entity to the second control entity. Prior art multi-cycle replication methods make use of the dirty bit history of each memory cell. As illustrated with "X" symbols, a dirty bit associated with a state variable indicates for each cycle if the state variable has changed in view of the preceding control cycle. In other words, a dirty bit is a bit that indicates a change. There may be a wide range regarding the number of state variables. Complex automation systems may have application states including thousands of state variables. In FIG. 2, in cycle 1 the dirty bits associated with the memory cells A, C, D and F indicate that those cells changed versus the preceding control cycle. In cycle 2 the cells B, C and H changed vs. cycle 1. Cell F did change from cycle 0 to 1 but was not replicated in cycle 1. Therefore, the dirty bit is still valid in a sense that cell F needs still to be replicated to replicate a full and valid checkpoint. In cycle 3, cells A, and C changed vs. cycle 2. Cell H did change from cycle 1 to 2 but was not replicated in cycle 2. Therefore, the dirty bit is still valid in a sense that cell H needs still to be replicated to replicate a full and valid checkpoint. It is assumed that the available bandwidth and control cycle length allow for replicating three memory cells per control cycle. In the prior art example, the method simply selects the first three changed cells from the total list of changed cells per cycle for replication in the respective cycle which is illustrated by circles around the respective dirty bits. That is, in cycle 1 cells A, C and D are replicated but cell F is not replicated. In cycle 2, cells B, C and F are replicated but cell H is not replicated. In cycle 3, cells A, C and H are replicated. In the example, after three cycles a full, consistent state replication for the entire checkpoint has been achieved and the complete checkpoint is available at the second control entity at the end of the replication period. However, this occurs by accident. Assuming that in cycle 3 also cell G would have changed, then cell G would have been replicated instead of cell H and cell H could be replicated in the following control cycle or may actually never be replicated leading to an incomplete checkpoint at the second control entity. For example, if cell G also changes in the third control cycle and the changes repeat in the following cycles (i.e. cycle 4 = cycle 1, cycle 5 = cycle 2, ...), then H actually is never transmitted to the secondary control entity. It may be that cell H however tracks a state variable of high priority, such as the temperature related state of the cooling device in the earlier described example. As a consequence, highly relevant state variables may not be replicated in due time if a system failure of the primary control entity requires a switchover of the control application to the secondary control entity. In such a case, the secondary control entity may not be able to execute the control application as desired.

Turning back to FIGs. 1 and 3A, the adaptive multi-cycle replication method 1000 starts for each control cycle of the primary control entity 110 with reading 1100 an application state of the primary control entity 110 from a plurality of memory cells A to H of the primary control entity 110. Reading is based on system knowledge about which memory cells belong to the application state and being able to access the content of the respective memory cells. Each memory cell A to H corresponds to a state variable of the application state of a control application executed by the first control entity 110. FIG. 3A shows a snapshot of the state replication system 100 at the end of control cycle 1 (cf. FIG: 3B).

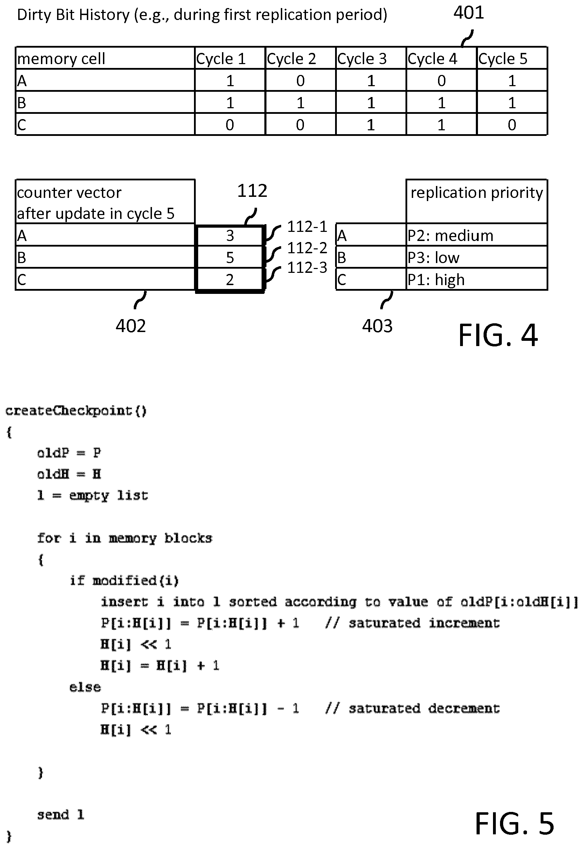

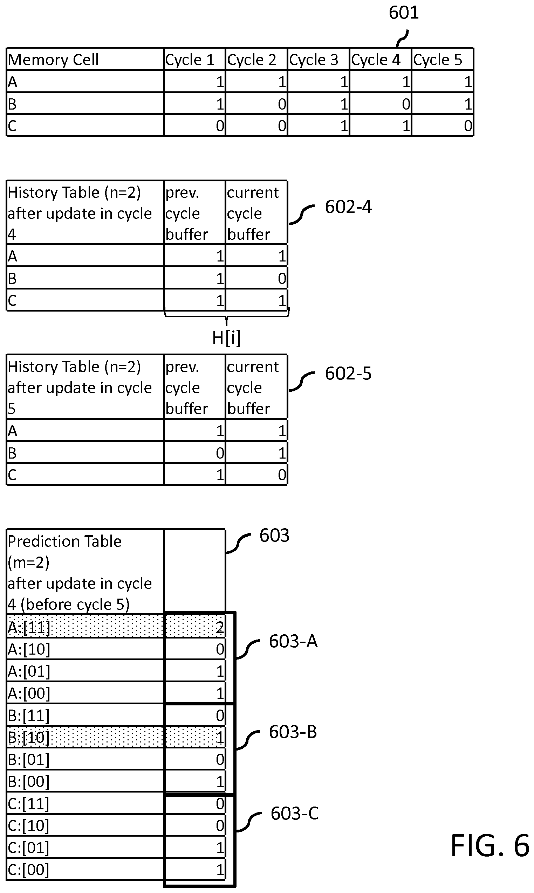

The first control entity 110 includes replication priority metrics 111. Such metrics 111 may be implemented in the form of a rule set, program code and/or hardware implemented components. For example, as described further down in the context of FIG. 4, a counter structure may be used to implement replication priority metrics 111. Other implementations are mentioned in the summary or are explained in the context of FIGs. 5 and 6. The replication priority metrics 111 is applied 1200 (by a processor of the primary control entity) to each state variable of the primary control entity to compute 1210 a replication priority per state variable based on the change behavior of the respective state variable. In the example of FIG. 3A, possible priorities are P1, P2, P3 or P4. In the example it is assumed that for the cell A the highest replication priority P1 is computed. For cells, C, D and G the replication priority P2 (ranking second in the priority ranking) is computed. For the cells B and E the replication priority P3 (ranking third) is computed, and for the cells F an H the replication priority P4 (ranking fourth) is computed. The replication priority per state variable may be computed by taking into account the change behavior of the state variable comparing the current control cycle with the preceding control cycle but it may also take into account an extended change history of the state variable taking into account the change behavior of the state variable in previous control cycles.

The processor then determines 1300 a sub-set of the plurality of memory cells based on the replication priority of the respective state variables in the current control cycle (cycle 1). In the example, it is assumed that the system 100 has a bandwidth which limits the number of state variable that can be replicated within one control cycle to three state variables. As a consequence, the primary control entity determines a sub-set of the memory cells including three cells with currently highest ranked replication priorities. As a consequence, in control cycle 1 the processor determines the memory cells A, C, D for the sub-set which have the replication priorities P1 and P2. Although memory cell G also has the second ranked replication priority P2 it won't be replicated in the current control cycle because the bandwidth only allows the transmission of three state variables in one control cycle. Alternatively, instead of cell G, cells C or D could also be left out dependent on the algorithm which determines the ranking of cells having the same replication priority. The memory cells of the first sub-set determined in control cycle 1 are illustrated with dotted background. Finally, the determined first sub-set A, C, D is replicated 1400 to at least one secondary control entity 120 in control cycle 1 of the replication period 300 (cf. FIG. 3B). Typically, a replication period lasts as long as necessary to replicate an entire checkpoint. However, it is also possible that a replication period includes less control cycles so that only partial checkpoint replication is achieved. Typically, one replication period is seamlessly succeeded by the next replication period. However, there may also be one or more control cycles between two consecutive replication periods. It is to be noted that there is no dependency between control cycles for computing replication priorities and control cycles for replicating at least partial application states (partial checkpoints). In other words, the system may continuously compute replication priorities with each control cycle but only replicate partial checkpoints in control cycles which belong to a replication period. For example, the start of a replication period may be predefined (e.g., every n-th control cycle) or it may be dynamically determined by evaluating the change history of the application state or it may be started automatically after the end of the preceding replication period (e.g., upon a successful replication of a complete checkpoint). For example, if no changes of state variables occurred for a certain period then no replication period may be started until at least one state variable changes.

Dependent on the available replication bandwidth and the control cycle length, the primary control entity may also select memory cells with a lower replication priority (e.g., P3, P4) for replication. In that sense, the proposed multi-cycle replication method is adaptive because it can be adjusted to the communication constraints between the primary and secondary control entities while at the same time ensuring that the most relevant state variables are transferred first and that the replication of a complete checkpoint can be achieved faster. In prior art solutions where state variables are replicated irrespective of their replication priority the same information is replicated multiple times which lead to a slower replication speed and/or a higher bandwidth consumption. On the contrary, embodiments of the invention allow, even in case the primary control entity 110 stops working before a complete checkpoint is replicated, the secondary control entity may nevertheless take over the control application on the basis of the most relevant state variables which are already replicated at that point in time. The use of the replication priority for sub-set selection of the to-be-replicated state variables allows reducing duplicate replication of the same information in multiple control cycles of the replication period.

FIG. 3B illustrates the replication of the complete checkpoint based on replication priorities according to an embodiment of the invention. The figure illustrates the replicated cells in the secondary control entity 120 at the ends of three consecutive control cycles of the replication period 300. Arrows pointing to the cells indicate replication 1400 as in FIG. 3A. It is assumed that cell D which was replicated already in cycle 1 changes again in cycle 2 and that the priority ranking which was computed 1210 (cf. FIG. 3A) in cycle 1 with replication priority metrics 111 is still valid.
Therefore, in control cycle 2 of the replication period 300 the secondary control entity 120 may receive the state variables of memory cells D, G and B (second sub-set) all having the replication priorities P2 and P3 (ranking second and third) and being the cells with the highest replication priority where a change occurred which has not yet been replicated . Instead of cell B equally cell E could have been selected dependent on the ranking algorithm. It is then assumed that no further changes of the application state occur in control cycle 3 and that the computed priority ranking remains valid. This leads to determining the third sub-set including memory cells E, F and H having the lowest ranking replication priorities P3 and P4. After the replication of the third sub-set the replication of the complete checkpoint on the secondary control entity 120 is achieved at the end of the 3rd cycle.

An adaptive replication strategy may be implemented in different ways. For example, in some applications fast changing state variables may be more important (higher in priority) than slowly changing state variables because a reasonable switchover may even be feasible without the complete checkpoint being available at the second control entity and the fast changing state variables might be more important to avoid bumps in the process. In such cases, the replication strategy may be adapted to prefer state variables for replication that have a high metric value by computing high replication priority values based on a frequent change behavior.

FIG. 4 illustrates a counter based embodiment for computing a replication priority per state variable. The counter based embodiment is one possible implementation for extracting history information to determine the sub-sets of state variables. There are other techniques known by a person skilled in the art which can be used for information extraction, e.g., memory access prediction to further increase the prediction accuracy, or using a global history to detect correlations between state variables or between input and state variables.

The counter based embodiment goes beyond the dirty bit approach in that a metric value per state variable is computed which indicates a frequency of change in a given time window for the respective state variables. A higher computed counter value indicates a higher change frequency in the recent control cycles covered by the given time window.

The counter example refers to an application where slowly changing state variables are more important than fast changing state variables because a reasonable switchover may even be feasible without the complete checkpoint being available at the second control entity. In this case, the replication strategy may be adapted to prefer state variables for replication that have a low metric value (i.e., computing a higher replication priority for the low metric value). A low metric value in this context may still mean that the respective state variable has been changed recently, as the system may perform a partial state replication that neglects state variables which haven't been changed since last valid checkpoint. In other words, even if a state variable had a high replication priority it may be disregarded in a partial state replication if it has not changed since the last partial check point replication. For example, this can be implemented by computing no replication priority at all for a cell which is not being considered for replication because it did not change since its last replication. In another implementation the system can compute a replication priority for such a cell but a "disregard" flag may be set for this cell which is removed with the next change of the cell content. This ensures that slow changing state variables which more likely may represent significant changes of the application state are always kept up to date in the secondary control entities. In addition, this ensures that on average less data needs to be transmitted during a replication period, as the fast-changing variables are transmitted at the end of the replication period, and as a consequence the likelihood of duplicate transmission is significantly decreased.

An established technique for tracking changes in the state of an application is a bit set which is indexed using the address or the offset of a memory cell or a larger memory block. Whenever a memory block is changed by the application, the respective bit in the bit set is set to "1" in order to mark the block as "dirty". Only memory cells with a nonzero dirty bit are to be transferred to a standby secondary control entity to replicate the state of the control application of the primary control entity.
The counter based embodiment in FIG. 4 uses a similar tracking, but instead of only using the dirty bit to indicate changes to the application state, it uses a frequency counter vector F 112 including individual counters F[i] 112-1, 112-2, 112-3 to count the accumulated number of changes (e.g., per replication period or any other appropriate history sampling period) for each memory block i and state variable in the application state. In other words, a counter 112-1, 112-2, 112-3 for a particular memory cell A, B, C is incremented with each control cycle where the particular cell has changed vs. the preceding cycle. The primary control entity may further store a historical counter value Fhist which stores the counter value of a state variable for a previous history sampling period. The history sampling period may correspond to a replication period but can also deviate from this. Upon control application startup, F 112 may be initialized to contain only zeroes. After each control cycle, the value of an individual counter F[i] is updated depending on whether the memory cell with index i has been modified. If the memory cell has not been modified, F[i] is not changed. If the respective memory cell has been modified, F[i] is incremented by one.
If a complete and consistent state replication has been achieved by the adaptive multi-cycle replication method, the values of F[i] can be copied into Fhist[i], i.e., the change frequency observed during the previous replication period may be kept for adapting the replication strategy in the next replication period. In this embodiment the history sampling period may coincide with the replication period.
The value of Fhist[i] can be used to predict whether the individual counter value of the memory block i is likely to change often or rarely in the next replication period.

The higher the counter value stored in the counter vector 112, the more likely the memory cell will change with high frequency during the next replication period, and thus, during the next control cycles. The individual counter values F[i] for a replication period correspond to the computed replication priority for the respective memory cells i. Therefore, sorting the memory blocks/cells in ascending or descending order according to their respective individual counter values allows a ranking of the state changes with regards to the respective replication priority. In the example, the sorting would result in the cell order C (F[3]=2), A (F[1]=3), B (F[2]=5). Such a prioritization increases the likelihood that a consistent application state can be replicated if the control cycle time of the application or the available bandwidth between primary and secondary control entity does not allow the transmission of all state changes. In this case, replicating changed memory areas which are less likely to change in the next cycle allows a better utilization of the available bandwidth.
For the first replication cycle there may not yet be any historical counter values available for prioritization. Still, the counter values F[i] of the current replication cycle may already be used during the first replication period for prioritization. The knowledge collected by the individual counter values about the relevance of the various state variables improves with every executed control cycle. Ranking the memory cells according to accumulated counter values at the end of the first replication period already increases likelihood of a full, consistent state replication with the first replication period.

The example in FIG. 4 shows a simple control application having three memory cells A, B, C. The upper table 401 illustrates the dirty bit history during the first replication period lasting for five cycles. The cells are assumed to have cyclic access patterns. In the example, the first memory cell A is assumed to change every second cycle. The second memory cell B is assumed to change with every cycle. The third memory cell C is assumed to remain unchanged for two cycles and then change in two consecutive cycles, and so on. The dirty bit history reflects such changes of the respective cells during the first replication period. For example, in cycle 1 cells A and B change. In cycle 2 only cell B changes, and on. The lower left table 402 shows the counter vector 112 with the individual counter values F[i] associated with the respective memory cells after the update of F in control cycle 5. Thereby, it is assumed that the values are related to the history sampling period (e.g., first replication period), i.e., there are no historical values stored in Fhist, yet. The counter values of F during the first history sampling period may be used to prioritize the memory cells for state replication in the control cycle for which the checkpoint is created. The resulting replication priorities are shown in the lower left table 403. Memory cell C is assigned to replication priority high, A to medium and B to low. This may cause that firstly memory cell C is be selected for replication, then A, and finally B. After a successful first replication the replication priority values may be static from that point in time. In this case, static Fhist may be used for determining the sub-sets of memory cells for replication, thus reducing the computation overhead for sorting and creation of the checkpoint.

FIG. 6 illustrates a further embodiment for computing replication priorities based on a history table 602 (602-4 after update in control cycle 4, 602-5 after update in control cycle 5) and a prediction table 603. The example is based on a CPU branch prediction method with respective replication adaptation.
The evolution of the values in the history table and the prediction tables is illustrated in FIG. 6 for a simple application with three memory cells A, B, C which have cyclic access patterns. The first memory cell A is assumed to change in every cycle; the second memory cell B is assumed to change in every second cycle; the third memory cell C is assumed to repeatedly remain unchanged for two control cycles, then change in two consecutive control cycles, and so on.
The prediction technique uses an encoding which is similar to a set of dirty bits, but instead of only using a single bit to indicate changes to the application state, it uses n bits to encode changes in the previous n-1 cycles as well. Encoding in this context includes the buffering of the dirty bit vector of the application state for the current control cycle and the previous n-1 control cycles. In other words, the history table H 602 stores n bits for every memory cell of the application state.
Upon application startup, table H 602 is initialized to contain only zeroes. After each control cycle, the value of H[i] is updated depending on whether the memory cell with index i has been modified. If the cell has not been modified, a logical left shift is applied to the contents to H[i]. If the respective memory block has been modified, a logical left shift is applied to H[i] and the resulting value is incremented by one. Thus, the rightmost bit of H[i] encodes the dirty bit of the current control cycle, while the other bits encode the dirty bits of previous cycles. In other words, the right column of table 602 buffers the dirty bits for the application state corresponding to the changes in the current control cycle vs. the previous control cycle. The next left column of history table 602 buffers the dirty bits for the application state corresponding to the changes in the previous control cycle vs. the control cycle before the previous one. In the example history table 602-4 shows the content for n=2 after the update in control cycle 4 and history table 602-5 shows the content of the same table after the update in control cycle 5 with regards to the dirty bit history of the memory cells illustrated in table 601 for five control cycles. In principle the history table 602 can be considered to be a FIFO (First In First Out) buffer structure where the current dirty bit vector for the memory cells is fed in from the right sight and shifted through the history table 602 buffer to the left. The FIFO can also be designed the other way round.
The prediction table P 603 stores 2^n saturating counters with m bits for every memory cell A, B, C of the application state. Upon application startup, it is initialized with zeroes. Before the value of H[i] is updated in a control cycle, the bitwise concatenation of memory cell i and H[i] is used as index into the prediction table and update the prediction counter. If the memory cell i has been modified, P[i:H[i]] is incremented by one if it has not reached the maximum value (2^m-1) yet. If the memory cell with index i has not been modified, P[i:H[i]] is decremented by one as long as it is nonzero. In the example of FIG. 6 P 603 stores 22 =4 saturating counters 603-A, 603-B, 603-C with 2 bits for every memory cell A, B, C respectively. For cell A, the four respective saturating counters 603-A count the occurrences of the respective dirty bit sequences in the history table buffer. That is, A:[11] is incremented when both bits in the history table 602 are "1" and the content of A has changed in the current cycle for which the update to both tables is performed. The index A:[11] for selecting the entry in the prediction table is calculated before the entry for A in the history table is updated. In the example, the history table was initialized with "0" leading to incrementing the counter for A:[00] to 1. In the example of FIG. 6 the saturating counter values in the prediction table 603 are shown after the update in control cycle 4. Memory cell A is modified in each control cycle. As the history table 602 is initialized with zeroes the history table entry for cell A during cycle 1 before the update of the history table is "00". Because cell A changes in cycle 1 the respective saturating counter value 603-A is incremented for the history table lookup value A:[00] resulting in "1". After the update of the prediction table 603 the history table is updated at the end of control cycle 1 by shifting the change flag of cell A into the current cycle buffer resulting in the history table entry "01" for cell A. Because cell A changes again in cycle 2 the respective saturating counter value 603-A is incremented for the history table lookup value A:[01] resulting in "1". After the update of the prediction table 603 the history table is updated at the end of control cycle 2 by shifting the content of the current cycle buffer into the previous cycle buffer and shifting the change flag of cell A (in relation to cycle 2) into the current cycle buffer resulting in the history table entry "11" for cell A. Because cell A changes again in cycle 3 the respective saturating counter value 603-A is incremented for the history table lookup value A:[11] resulting in "1". After the update of the prediction table 603 the history table is updated at the end of control cycle 3 by shifting the content of the current cycle buffer into the previous cycle buffer and shifting the change flag of cell A (in relation to cycle 3) into the current cycle buffer resulting again in the history table entry "11" for cell A. This is repeated in cycle 4 and the respective saturating counter value 603-A is incremented again for the history table lookup value A:[11] resulting in "2". This situation after the update in cycle 4 is illustrated in the prediction table 603.
In a similar way the saturating counters 603-B and 603-C are computed for the cells B and C, respectively. Because cell B changes in cycle 1 the respective saturating counter value 603-B is incremented for the history table lookup value B:[00] resulting in "1". Cell B does not change in cycle 2. However, since the respective counter value 603-B for history table lookup value B:[01] has the value "0" already, the resulting decrement has no effect. The history table is updated at the end of control cycle 2 by shifting the content of the current cycle buffer into the previous cycle buffer and shifting the change flag of cell B (in relation to cycle 2) into the current cycle buffer resulting in the history table entry "10" for cell B. Because cell B changes again in cycle 3 the respective saturating counter value 603-B is incremented for the history table lookup value B:[10] resulting in "1". After the update of the prediction table 603 the history table is updated at the end of control cycle 3 by shifting the content of the current cycle buffer into the previous cycle buffer and shifting the change flag of cell B (in relation to cycle 3) into the current cycle buffer resulting again in the history table entry "01" for cell B. In cycle 4 cell B does not change and therefore the saturating counter 603-B for the history table lookup value B:[01] has the value "0" already, it is thus not modified in cycle 4. The prediction table lookup index for memory cell B before control cycle 5 is B:[10] as the cell has been changed in cycle 3, but not in cycle 4. The counter at this position of the prediction table stores the value 1 as it has already been incremented in cycle 3, which was the last cycle where memory cell B was modified.
The entries in the prediction table 603 which can be used for sorting the changed memory cells in control cycle 5 (before update) are highlighted. Only the memory cells modified in the current cycle may be prioritized, assuming that all previous changes were transmitted successfully. Based on the aforementioned assumption of cyclic modifications to the memory cells, the values in the prediction table correctly predict the changes in the next cycle.
The values of the saturating counters in the prediction table 603 can be used to adjust the adapt strategy for the adaptive multi-cycle replication. The value of P[i:H[i]] can be used to predict whether the value of the memory cell i is likely to change in the next control cycle. The higher the value stored in the prediction table 603, the more likely another change to the memory cell in the next control cycle is to be expected based on the previously observed change patterns. Sorting the modified memory cells in ascending order according to the respective prediction value (saturating counter values representing the replication priorities) allows a prioritization of the state changes. The sorting is advantageously done before updating the values of tables H 602 and P 603 in each control cycle. The sorting according to the computed replication priorities and the respective selection of sub-sets of memory cells increases the likelihood that a consistent application state can be replicated if control cycle time of the control application or the available bandwidth between primary and standby secondary entities does not allow the transmission of all state changes. In this case, replicating changed memory cells which are less likely to change in the next cycle allows a better utilization of the available bandwidth. Replicating the updated state variables for a memory cell which is likely to change again soon may be the better strategy in this case as it allows an earlier replication of a consistent state at the secondary control entity. Transmitting memory cells erroneously is not a problem, as the updated values can be simply sent again in one of the following control cycles without impact on the replication quality of the proposed technique.
For a concrete implementation, setting the value of n and m to 2 (as in the example) already provides change predictions with good accuracy, but increasing their values can further improve the prediction, in particular with respect to complex, cyclic access patterns.
The changes to the history and prediction tables during checkpoint creation can be performed by the execution of a corresponding software program whose function is exemplary illustrated in FIG. 5 using pseudo-code. The values stored in H and P during the preceding control cycle may be used to prioritize the changes to the application state in the control cycle for which the partial checkpoint is created. The updates to the respective tables based on the changes in the current control cycle can occur independently from the sorting of modified memory cells. In the beginning, the pseudo code includes instructions to make a copy of the prediction and history tables (oldP and oldH). These values are used to calculate the new values in the prediction table for all memory cells which have been modified. Afterwards, the pseudo code includes instructions to iterate over all memory cells (or memory blocks). If a cell has changed (was modified), the old values of P and H are used to calculate the updated value in the prediction table. The changed data is inserted into a list I in which the changes are sorted according to the respective value in the prediction table. Then, the updates to P and H at the index i of the memory cell are calculated as previously described: the value of P[i:H[i]] is increased if the maximum value has not been reached and the history table entry H[i] is shifted (left bit shift) and its last bit is set to "1" (by adding 1). In case the memory cell at index i has not changed, the value of P[i:H[i]] is decremented if it is not zero yet. The entry of H[i] is shifted to the left, leaving the last bit "0". After all memory cells have been checked for changes, the list of changes I, which is sorted according to the replication priorities calculated from the prediction table, is transmitted to the secondary control entity. The send operation may not necessarily transmit all changes if the available bandwidth is not sufficient or other system constraints prevent a full checkpoint replication.
Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry. Controller entities may be communicatively coupled with displays which may be part of a remote computer collecting data from the controller and visualizing the data. A display device of the remote computer can be, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.
The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or controller devices, e.g., control entities in an automation system (embedded or non-embedded) or any combination of such back-end, middleware, control entities or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.
The computing system can include clients and servers. A client and server are generally remote from each other and typically interact through a communication network. The relationship of client and server arises by virtue of computer programs running on the respective computers and having a client-server relationship to each other.

## Claims

1. A computer implemented adaptive multi-cycle replication method (1000), comprising:
with each control cycle of a control application executed by a primary control entity (110) reading (1100) an application state of the control application from a plurality of memory cells (A to H) of the primary control entity (110), each memory cell (A to H) corresponding to a state variable of the application state, and applying (1200) replication priority metrics (111) to each state variable to compute (1210) a replication priority (P1, P2, P3, P4) per state variable based at least on the change behavior of the state variable; and if the control cycle belongs to a replication period (300) determining (1300) a sub-set (A, C, D) of the plurality of memory cells based on the replication priorities of the respective state variables, and replicating (1400) the sub-set (A, C, D) to at least a secondary control entity (120) for at least partial state replication of the application state of the primary control entity (110).

2. The method of claim 2, wherein the replication priority per state variable is computed by taking into account the change behavior of the state variable in at least one previous control cycle.

3. The method of claim 1 or 2, wherein the replication priority metrics (111) is implemented by a change counter vector (112) having a counter (112-1, 112-2, 112-3) for each state variable, the method further comprising:
with each control cycle incrementing a particular counter (112-1) for a particular state variable if the particular state variable (A) has changed with regards to the preceding control cycle; and computing a particular replication priority based on the value of the particular incremented counter (112-1).

4. The method of claim 1 or 2, wherein the replication priority metrics is implemented by a history table using n bits per state variable to buffer change information of the respective memory cell over the previous n-1 control cycles and the current control cycle, and a prediction table storing 2n saturating counters with m bits per state variable, wherein a particular saturating counter associated with a particular memory cell is incremented if the respective entry in the history table indicates a change of the particular memory cell and the particular saturating counter value is below its maximum value 2m - 1, and wherein the saturating counter is decremented if the respective entry in the history table indicates no change of the particular memory cell and the saturating counter value is above 0, and wherein a particular replication priority for the particular memory cell is computed based on the highest value of saturating counters associated with the particular memory cell.

5. The method of any of the previous claims, wherein determining (1300) the sub-set comprises sorting the memory cells according to the computed replication priorities into a priority ranking list and selecting the highest ranking memory cells for replication wherein the number of the highest ranking memory cells is limited by physical constraints associated with the primary and secondary control entities.

6. The method of any of the previous claims, wherein the end of the replication period (300) is reached upon successful replication of the entire application state and triggers the beginning of the next replication period.

7. The method of any of the claims 1 to 5, wherein the end of the replication period (300) is reached by means of system constraints like limited bandwidth or control cycle length before a successful replication of the entire application state such that only a part of the application state is replicated and that the end of the replication period (300) triggers the beginning of the next replication period.

8. A computer program product that when loaded into a memory of a computing device and executed by at least one processor of the computing device executes the steps of the computer implemented method according to any one of the previous claims.

9. A primary control entity (110) including a control computer configured for adaptive multi-cycle replication, comprising:
a plurality of memory cells (A to H), each memory cell (A to H) corresponding to a state variable of an application state of a control application executed by the control entity; storage means configured to store replication priority metrics (111) configured to compute (1210) a replication priority (P1, P2, P3) per state variable based at least on the change behavior of the state variable; a processor configured to execute the following functions: with each control cycle
read the application state of the control application from the plurality of memory cells (A to H), and apply (1200) the replication priority metrics (111) to each state variable to compute the replication priority (P1, P2, P3, P4) per state variable; and if the control cycle belongs to a replication period (300) determine (1300) a sub-set (A, C, D) of the plurality of memory cells based on the replication priorities of the respective state variables, and send the sub-set (A, C, D) to a secondary control entity (120) including a further control computer for at least partial state replication of the application state of the primary control entity (110).

10. The primary control entity (110) of claim 9, wherein the replication priority per state variable takes into account the change behavior of the state variable in at least one previous control cycle.

11. The primary control entity (110) of claims 9 or 10, wherein the replication priority metrics (111) is implemented by a change counter vector (112) having a counter (112-1, 112-2, 112-3) for each state variable, wherein with each control cycle a particular counter (112-1) for a particular state variable is incremented if the particular state variable (A) has changed with regards to the preceding control cycle, and a particular replication priority for the particular state variable is based on the value of the particular incremented counter (112-1).

12. The primary control entity (110) of claim 9 or 10, wherein the replication priority metrics is implemented by a history table using n bits per state variable to buffer change information of the respective memory cell over the previous n-1 cycles and the current cycle, and a prediction table storing 2n saturating counters with m bits per state variable,
wherein a particular saturating counter associated with a particular memory cell is incremented if the respective entry in the history table indicates a change of the particular memory cell and the particular saturating counter value is below its maximum value 2m - 1, and wherein the saturating counter is decremented if the respective entry in the history table indicates no change of the particular memory cell and the saturating counter value is above 0, and wherein a particular replication priority for the particular memory cell is based on the highest value of saturating counters associated with the particular memory cell.

13. The primary control entity (110) of any of claims 9 to 12, wherein the processor is further configured: to sort the memory cells according to the computed replication priorities into a priority ranking list; and to select the highest ranking memory cells for replication wherein the number of the highest ranking memory cells is limited by physical constraints associated with the primary and secondary control entities.

14. The primary control entity (110) of any of claims 9 to 13, wherein the end of the replication period (300) is reached upon successful replication of the entire application state and defines the beginning of the next replication period.

15. The primary control entity (110) of any of claims 9 to 13, wherein the end of the replication period (300) is reached by means of system constraints like limited bandwidth or control cycle length before successful replication of the entire application state and defines the beginning of the next replication period.

16. Computer system for multi-cycle replication comprising at least one primary control entity (110,120) according to one of the claims 9 to 15.

## Patentansprüche

1. Computerimplementiertes adaptives Verfahren zur Multi-Zyklus-Replikation (1000), umfassend:
bei jedem Steuerungszyklus einer Steuerungsanwendung, die durch eine primäre Steuerungsentität (110) ausgeführt wird, Lesen (1100) eines Anwendungszustands der Steuerungsentität von mehreren Speicherzellen (A bis H) der primären Steuerungsentität (110), wobei jede Speicherzelle (A bis H) einer Zustandsvariable des Anwendungszustands entspricht, und Anwenden (1200) von Replikationsprioritätsmetriken (111) auf jede Zustandsvariable, um eine Replikationspriorität (P1, P2, P3, P4) pro Zustandsvariable basierend wenigstens auf dem Änderungsverhalten der Zustandsvariable zu berechnen (1210); und falls der Steuerungszyklus zu einer Replikationsperiode (300) gehört, Bestimmen (1300) einer Teilmenge (A, C, D) der mehreren Speicherzellen basierend auf den Replikationsprioritäten der jeweiligen Zustandsvariablen und Replizieren (1400) der Teilmenge (A, C, D) auf wenigstens eine sekundäre Steuerungsentität (120) für eine wenigstens teilweise Zustandsreplikation des Anwendungszustands der primären Steuerungsentität (110) .

2. Verfahren nach Anspruch 2, wobei die Replikationspriorität pro Zustandsvariable berechnet wird, indem das Änderungsverhalten der Zustandsvariablen in wenigstens einem vorherigen Steuerungszyklus berücksichtigt wird.

3. Verfahren nach Anspruch 1 oder 2, wobei die Replikationsprioritätsmetriken (111) durch einen Änderungszählervektor (112) mit einem Zähler (112-1, 112-2, 112-3) für jede Zustandsvariable implementiert werden, wobei das Verfahren ferner umfasst:
bei jedem Steuerungszyklus, Erhöhen eines bestimmten Zählers (112-1) für eine bestimmte Zustandsvariable, falls sich die bestimmte Zustandsvariable (A) in Bezug auf den vorherigen Steuerungszyklus geändert hat; und Berechnen einer bestimmten Replikationspriorität basierend auf dem Wert des bestimmten erhöhten Zählers (112-1).

4. Verfahren nach Anspruch 1 oder 2, wobei die Replikationsprioritätsmetriken durch eine Historientabelle unter Verwendung von n Bits pro Zustandsvariable zum Puffern von Änderungsinformationen der jeweiligen Speicherzelle über die vorherigen n-1 Steuerungszyklen und den aktuellen Steuerungszyklus hinweg und eine Vorhersagetabelle, in der 2n sättigende Zähler mit m Bits pro Zustandsvariable gespeichert werden, implementiert werden, wobei ein bestimmter sättigender Zähler, der einer bestimmten Speicherzelle zugeordnet ist, erhöht wird, falls der jeweilige Eintrag in der Historientabelle eine Änderung der bestimmten Speicherzelle anzeigt und der Wert des bestimmten sättigenden Zählers unter seinem Maximalwert 2m - 1 liegt, und wobei der sättigende Zähler verringert wird, falls der jeweilige Eintrag in der Historientabelle keine Änderung der bestimmten Speicherzelle anzeigt und der Wert des sättigenden Zählers über 0 liegt, und wobei eine bestimmte Replikationspriorität für die bestimmte Speicherzelle basierend auf dem höchsten Wert der sättigenden Zähler, die der bestimmten Speicherzelle zugeordnet sind, berechnet wird.

5. Verfahren nach einem der vorstehenden Ansprüche, wobei das Bestimmen (1300) der Teilmenge das Sortieren der Speicherzellen gemäß den berechneten Replikationsprioritäten in eine Prioritätsrangliste und das Auswählen der höchstrangigen Speicherzellen für die Replikation umfasst, wobei die Anzahl der höchstrangigen Speicherzellen durch physische Einschränkungen, die der primären und sekundären Steuerungsentität zugeordnet sind, begrenzt ist.

6. Verfahren nach einem der vorstehenden Ansprüche, wobei das Ende der Replikationsperiode (300) bei erfolgreicher Replikation des gesamten Anwendungszustands erreicht wird und den Beginn der nächsten Replikationsperiode auslöst.

7. Verfahren nach einem der Ansprüche 1 bis 5, wobei das Ende der Replikationsperiode (300) durch Systemeinschränkungen, wie begrenzte Bandbreite oder Steuerungszykluslänge, vor einer erfolgreichen Replikation des gesamten Anwendungszustands erreicht wird, so dass nur ein Teil des Anwendungszustands repliziert wird und dass das Ende der Replikationsperiode (300) den Beginn der nächsten Replikationsperiode auslöst.

8. Computerprogrammprodukt, das, wenn es in einen Speicher einer Datenverarbeitungsvorrichtung geladen und durch wenigstens einen Prozessor der Datenverarbeitungsvorrichtung ausgeführt wird, die Schritte des computerimplementierten Verfahrens gemäß einem der vorstehenden Ansprüche ausführt.

9. Primäre Steuerungsentität (110), die einen Steuerungscomputer aufweist, der zur adaptiven Multi-Zyklus-Replikation ausgelegt ist, umfassend:
mehrere Speicherzellen (A bis H), wobei jede Speicherzelle (A bis H) einer Zustandsvariable eines Anwendungszustands einer Steuerungsanwendung entspricht, die durch die Steuerungsentität ausgeführt wird; Speichermittel, das dafür ausgelegt ist, Replikationsprioritätsmetriken (111) zu speichern, die dafür ausgelegt sind, eine Replikationspriorität (P1, P2, P3) pro Zustandsvariable basierend wenigstens auf dem Änderungsverhalten der Zustandsvariablen zu berechnen (1210); einen Prozessor, der dafür ausgelegt ist, die folgenden Funktionen auszuführen: bei jedem Steuerungszyklus,
Lesen des Anwendungszustands der Steuerungsanwendung von den mehreren Speicherzellen (A bis H) und Anwenden (1200) der Replikationsprioritätsmetriken (111) auf jede Zustandsvariable, um die Replikationspriorität (P1, P2, P3, P4) pro Zustandsvariable zu berechnen; und falls der Steuerungszyklus zu einer Replikationsperiode (300) gehört, Bestimmen (1300) einer Teilmenge (A, C, D) der mehreren Speicherzellen basierend auf den Replikationsprioritäten der jeweiligen Zustandsvariablen und Senden der Teilmenge (A, C, D) an eine sekundäre Steuerungsentität (120),
die einen weiteren Steuerungscomputer für eine wenigstens teilweise Zustandsreplikation des Anwendungszustands der primären Steuerungsentität (110) aufweist.

10. Primäre Steuerungsentität (110) nach Anspruch 9, wobei die Replikationspriorität pro Zustandsvariable das Änderungsverhalten der Zustandsvariablen in wenigstens einem vorherigen Steuerungszyklus berücksichtigt.

11. Primäre Steuerungsentität (110) nach Anspruch 9 oder 10, wobei die Replikationsprioritätsmetriken (111) durch einen Änderungszählervektor (112) mit einem Zähler (112-1, 112-2, 112-3) für jede Zustandsvariable implementiert sind, wobei bei jedem Steuerungszyklus ein bestimmter Zähler (112-1) für eine bestimmte Zustandsvariable erhöht wird, falls sich die bestimmte Zustandsvariable (A) in Bezug auf den vorherigen Steuerungszyklus geändert hat, und eine bestimmte Replikationspriorität für die bestimmte Zustandsvariable auf dem Wert des bestimmten erhöhten Zählers (112-1) basiert.

12. Primäre Steuerungsentität (110) nach Anspruch 9 oder 10, wobei die Replikationsprioritätsmetriken durch eine Historientabelle unter Verwendung von n Bits pro Zustandsvariable zum Puffern von Änderungsinformationen der jeweiligen Speicherzelle über die vorherigen n-1 Zyklen und den aktuellen Zyklus hinweg und eine Vorhersagetabelle, in der 2n sättigende Zähler mit m Bits pro Zustandsvariable gespeichert werden, implementiert sind,
wobei ein bestimmter sättigender Zähler, der einer bestimmten Speicherzelle zugeordnet ist, erhöht wird, falls der jeweilige Eintrag in der Historientabelle eine Änderung der bestimmten Speicherzelle anzeigt und der Wert des bestimmten sättigenden Zählers unter seinem Maximalwert 2m - 1 liegt, und wobei der sättigende Zähler verringert wird, falls der jeweilige Eintrag in der Historientabelle keine Änderung der bestimmten Speicherzelle anzeigt und der Wert des sättigenden Zählers über 0 liegt, und wobei eine bestimmte Replikationspriorität für die bestimmte Speicherzelle auf dem höchsten Wert der sättigenden Zähler basiert, die der bestimmten Speicherzelle zugeordnet sind.

13. Primäre Steuerungsentität (110) nach einem der Ansprüche 9 bis 12, wobei der Prozessor ferner ausgelegt ist zum: Sortieren der Speicherzellen gemäß den berechneten Replikationsprioritäten in eine Prioritätsrangliste; und Auswählen der höchstrangigen Speicherzellen für die Replikation, wobei die Anzahl der höchstrangigen Speicherzellen durch physische Einschränkungen, die der primären und sekundären Steuerungsentität zugeordnet sind, begrenzt ist.

14. Primäre Steuerungsentität (110) nach einem der Ansprüche 9 bis 13, wobei das Ende der Replikationsperiode (300) bei erfolgreicher Replikation des gesamten Anwendungszustands erreicht wird und den Beginn der nächsten Replikationsperiode definiert.

15. Primäre Steuerungsentität (110) nach einem der Ansprüche 9 bis 13, wobei das Ende der Replikationsperiode (300) durch Systemeinschränkungen, wie begrenzte Bandbreite oder Steuerungszykluslänge, vor erfolgreicher Replikation des gesamten Anwendungszustands erreicht wird und den Beginn der nächsten Replikationsperiode definiert.

16. Computersystem zur Multi-Zyklus-Replikation, das wenigstens eine primäre Steuerungsentität (110, 120) gemäß einem der Ansprüche 9 bis 15 umfasst.

## Revendications

1. Procédé de réplication multi-cycle adaptatif mis en oeuvre par ordinateur (1000), comprenant :
avec chaque cycle de contrôle d'une application de contrôle exécutée par une entité de contrôle primaire (110), lire (1100) un état d'application de l'application de contrôle à partir d'une pluralité de cellules de mémoire (A à H) de l'entité de contrôle primaire (110), chaque cellule de mémoire (A à H) correspondant à une variable d'état de l'état d'application, et appliquer (1200) une mesure de priorité de réplication (111) à chaque variable d'état pour calculer (1210) une priorité de réplication (P1, P2, P3, P4) par variable d'état sur la base au moins du comportement de changement de la variable d'état ; et si le cycle de contrôle appartient à une période de réplication (300), déterminer (1300) un sous-ensemble (A, C, D) de la pluralité de cellules de mémoire sur la base des priorités de réplication des variables d'état respectives, et répliquer (1400) le sous-ensemble (A, C, D) dans une entité de contrôle secondaire (120) pour au moins une réplication d'état partielle de l'état d'application de l'entité de contrôle primaire (110).

2. Procédé selon la revendication 2, dans lequel la priorité de réplication par variable d'état est calculée en tenant compte du comportement de changement de la variable d'état dans au moins un cycle de contrôle précédent.

3. Procédé selon la revendication 1 ou 2, dans lequel la mesure de priorité de réplication (111) est mise en oeuvre par un vecteur de compteur de changement (112) ayant un compteur (112-1, 112-2, 112-3) pour chaque variable d'état, le procédé comprenant en outre :
avec chaque cycle de contrôle, incrémenter un compteur particulier (112-1) pour une variable d'état particulière si la variable d'état particulière (A) a changé en ce qui concerne le cycle de contrôle précédent ; et calculer une priorité de réplication particulière sur la base de la valeur du compteur incrémenté particulier (112-1).

4. Procédé selon la revendication 1 ou 2, dans lequel la mesure de priorité de réplication est mise en oeuvre par une table d'historique qui utilise n bits par variable d'état pour mettre en mémoire tampon des informations de changement de la cellule de mémoire respective pendant les n-1 cycles de contrôle précédents et le cycle de contrôle courant, et une table de prédiction stockant 2n compteurs saturables avec m bits par variable d'état, un compteur saturable particulier associé à une cellule de mémoire particulière étant incrémenté si l'entrée respective dans la table d'historique indique un changement de la cellule de mémoire particulière et si la valeur de compteur saturable particulière est inférieure à sa valeur maximum 2m - 1, et le compteur saturable étant décrémenté si l'entrée respective dans la table d'historique n'indique aucun changement de la cellule de mémoire particulière et si la valeur de compteur saturable est supérieure à 0, et une priorité de réplication particulière pour la cellule de mémoire particulière étant calculée sur la base de la valeur maximale des compteurs saturables associés à la cellule de mémoire particulière.

5. Procédé selon l'une quelconque des revendications précédentes, dans lequel l'étape consistant à déterminer (1300) le sous-ensemble comprend trier les cellules de mémoire selon les priorités de réplication calculées dans une liste de classement de priorités et sélectionner les cellules de mémoire de plus haut classement pour une réplication, le nombre des cellules de mémoire de plus haut classement étant limité par des contraintes physiques associées aux entités de contrôle primaire et secondaire.

6. Procédé selon l'une quelconque des revendications précédentes, dans lequel la fin de la période de réplication (300) est atteinte lors d'une réplication réussie de l'état de l'application entière et déclenche le début de la période de réplication suivante.

7. Procédé selon l'une quelconque des revendications 1 à 5, dans lequel la fin de la période de réplication (300) est atteinte au moyen de contraintes système comme une bande passante ou une longueur de cycle de contrôle limitées avant une réplication réussie de l'état de l'application entière de sorte que seule une partie de l'état d'application est répliquée et que la fin de la période de réplication (300) déclenche le début de la période de réplication suivante.

8. Produit programme d'ordinateur qui, lorsqu'il est chargé dans une mémoire d'un dispositif informatique et exécuté par au moins un processeur du dispositif informatique, exécute les étapes du procédé mis en oeuvre par ordinateur selon l'une quelconque des revendications précédentes.

9. Entité de contrôle primaire (110) comportant un ordinateur de contrôle configuré pour une réplication multi-cycle adaptative, comprenant :
une pluralité de cellules de mémoire (A à H), chaque cellule de mémoire (A à H) correspondant à une variable d'état d'un état d'application d'une application de contrôle exécutée par l'entité de contrôle ; des moyens de stockage configurés pour stocker une mesure de priorité de réplication (111) configurée pour calculer (1210) une priorité de réplication (P1, P2, P3) par variable d'état sur la base au moins du comportement de changement de la variable d'état ; un processeur configuré pour exécuter les fonctions suivantes : avec chaque cycle de contrôle,
lire l'état d'application de l'application de contrôle à partir de la pluralité de cellules de mémoire (A à H), et appliquer (1200) la mesure de priorité de réplication (111) à chaque variable d'état pour calculer la priorité de réplication (P1, P2, P3, P4) par variable d'état ; et si le cycle de contrôle appartient à une période de réplication (300), déterminer (1300) un sous-ensemble (A, C, D) de la pluralité de cellules de mémoire sur la base des priorités de réplication des variables d'état respectives, et envoyer le sous-ensemble (A, C, D) à une entité de contrôle secondaire (120) comportant un autre ordinateur de contrôle pour au moins une réplication d'état partielle de l'état d'application de l'entité de contrôle primaire (110).

10. Entité de contrôle primaire (110) selon la revendication 9, dans laquelle la priorité de réplication par variable d'état tient compte du comportement de changement de la variable d'état dans au moins un cycle de contrôle précédent.

11. Entité de contrôle primaire (110) selon les revendications 9 ou 10, dans laquelle la mesure de priorité de réplication (111) est mise en oeuvre par un vecteur de compteur de changement (112) ayant un compteur (112-1, 112-2, 112-3) pour chaque variable d'état ;
avec chaque cycle de contrôle, un compteur particulier (112-1) pour une variable d'état particulière étant incrémenté si la variable d'état particulière (A) a changé en ce qui concerne le cycle de contrôle précédent, et une priorité de réplication particulière pour la variable d'état particulière étant basée sur la valeur du compteur incrémenté particulier (112-1).

12. Entité de contrôle primaire (110) selon la revendication 9 ou 10, dans laquelle la mesure de priorité de réplication est mise en oeuvre par une table d'historique qui utilise n bits par variable d'état pour mettre en mémoire tampon des informations de changement de la cellule de mémoire respective pendant les n-1 cycles précédents et le cycle courant, et une table de prédiction stockant 2n compteurs saturables avec m bits par variable d'état,
un compteur saturable particulier associé à une cellule de mémoire particulière étant incrémenté si l'entrée respective dans la table d'historique indique un changement de la cellule de mémoire particulière et si la valeur de compteur saturable particulière est inférieure à sa valeur maximum 2m - 1, et le compteur saturable étant décrémenté si l'entrée respective dans la table d'historique n'indique aucun changement de la cellule de mémoire particulière et si la valeur de compteur saturable est supérieure à 0, et une priorité de réplication particulière pour la cellule de mémoire particulière étant basée sur la valeur maximale des compteurs saturables associés à la cellule de mémoire particulière.

13. Entité de contrôle primaire (110) selon l'une quelconque des revendications 9 à 12, dans laquelle le processeur est en outre configuré pour : trier les cellules de mémoire selon les priorités de réplication calculées dans une liste de classement de priorités ; et sélectionner les cellules de mémoire de plus haut classement pour une réplication, le nombre des cellules de mémoire de plus haut classement étant limité par des contraintes physiques associées aux entités de contrôle primaire et secondaire.

14. Entité de contrôle primaire (110) selon l'une quelconque des revendications 9 à 13, dans laquelle la fin de la période de réplication (300) est atteinte lors d'une réplication réussie de l'état de l'application entière et définit le début de la période de réplication suivante.

15. Entité de contrôle primaire (110) selon l'une quelconque des revendications 9 à 13, dans laquelle la fin de la période de réplication (300) est atteinte au moyen de contraintes système comme une bande passante ou une longueur de cycle de contrôle limitées avant une réplication réussie de l'état de l'application entière et définit le début de la période de réplication suivante.

16. Système informatique pour une réplication multi-cycle comprenant au moins une entité de contrôle primaire (110, 120) selon l'une quelconque des revendications 9 à 15.
